# EUROPEAN PATENT SPECIFICATION

(11) **EP 4 032 724 B1**
(45) Date of publication and mention of the grant of the patent: **25.06.2025**
(21) Application number: 20865003.6
(22) Date of filing: 11.09.2020
(51) Int. Cl.: B60C 5/00, B60C 11/03, B60C 11/12, B60C 11/13, B60C 11/04

(54) **TIRE**
REIFEN
PNEUMATIQUE

(30) Priority: 20.09.2019 JP 2019171962
(43) Date of publication of application: 27.07.2022
(73) Proprietor: BRIDGESTONE CORPORATION, Chuo-ku Tokyo 104-8340 (JP)
(72) Inventor: NAKAMURA, Takamitsu, Chuo-ku, Tokyo 104-8340 (JP); SUZUKI, Haruka, Chuo-ku, Tokyo 104-8340 (JP)
(74) Representative: Marks & Clerk LLP
(86) International application number: PCT/JP2020/034518
(87) International publication number: WO 2021/054261

(56) References cited:
- EP-A1- 3 196 051
- WO-A1-2019/098277
- JP-A- 2009 056 822
- JP-A- 2009 056 822
- JP-A- 2009 067 181
- JP-A- 2013 133 080
- JP-A- 2014 233 992
- JP-A- 2014 233 992
- JP-A- 2016 525 043
- JP-A- 2017 065 625
- JP-A- 2017 065 625
- JP-A- 2020 131 801

## Description

### [Technical Field]

The present invention relates to a tire, and more particularly to an ultra-high performance tire mounted on a vehicle capable of traveling at an ultra-high speed.

### [Background Art]

Conventionally, in an ultra-high performance tire mounted on a vehicle capable of traveling at an ultra-high speed exceeding 250 km/h, it is important to ensure high-speed durability and steering stability. There is known an ultra-high performance tire that reduces tire noise (specifically, road noise) while securing such high-speed durability and steering stability (Patent Literature 1).

The ultra-high performance tire is provided with a circumferential belt using a steel cord. Thus, the suppression of creep deformation and the improvement of rigidity in the tire circumferential direction are realized. In particular, by improving the rigidity in the tire circumferential direction, high frequency road noise during high-speed traveling can be suppressed.

### [Citation List]

### [Patent Literature]

[Patent Literature 1] Japanese Unexamined Patent Application Publication No. 2006-69338
[Patent Literature 2] JP 2017065625 A discloses a pneumatic tire comprising two or more circumferential main grooves arranged on one region out of regions partitioned by a tire equator plane, and extending in a tire circumferential direction, and plural land parts which are partitioned by circumferential main grooves. An outside second land part comprises plural circular arc grooves which are formed into a bent or curved shape which is a salient state to the tire equator plane and which are continuously arranged in the tire circumferential direction. The circular arc grooves are opened to an outermost circumferential main groove on one ends of the grooves, and are communicated to other circular arm grooves adjacent in the tire circumferential direction on the other ends of the grooves. A maximum value Wg_max of a groove width Wg and a minimum value Wg_min of the groove width Wg of each circular arm groove 341 has a relationship of Wg_max/Wg_min≤1.10.

### [Summary of Invention]

In recent years, there has been an increasing demand for environmental performance, such as further reduction of tire noise, even for the ultra-high performance tires described above. In particular, the value of the tire noise (also referred to as pass-by noise (PBN)) produced when the power source (engine) of the vehicle is stopped and the vehicle is coasting at the specified speed is uniformly specified to be not more than 74 dB (for normal road) for tires having a tire width of more than 275 mm (ECE R 117-02).

On the other hand, the performance of the vehicle is remarkably improved, and it is required to ensure rigidity for a large lateral force in order to cope with not only the maximum speed but also a high cornering speed.

Accordingly, the present invention has been made in view of such a situation, and an object of the present invention is to provide a tire capable of achieving both suppression of tire noise and high rigidity with respect to lateral force, while allowing the vehicle to travel at an ultra-high speed.

One aspect of the present invention is a tire according to claim 1.

### [Effect of the Invention]

According to the tire described above, it is possible to achieve both the suppression of tire noise and the high rigidity with respect to lateral force while allowing the vehicle to travel at an ultra-high speed.

### [Brief Description of Drawings]

FIG. 1 is a partial plan view of a tread of a pneumatic tire 10.
FIG. 2 is a schematic cross-sectional view of the pneumatic tire 10 along the tire width direction and the tire radial direction.
FIG. 3 is a plan view of a width direction sipe 52.
FIG. 4 is a plan view of a lug groove 71.

### [Description of Embodiments]

Embodiments will be described below with reference to the drawings. Note that the same functions and structures are denoted by the same or similar reference numerals, and the description thereof is omitted as appropriate.

### (1)Overall schematic configuration of the tire

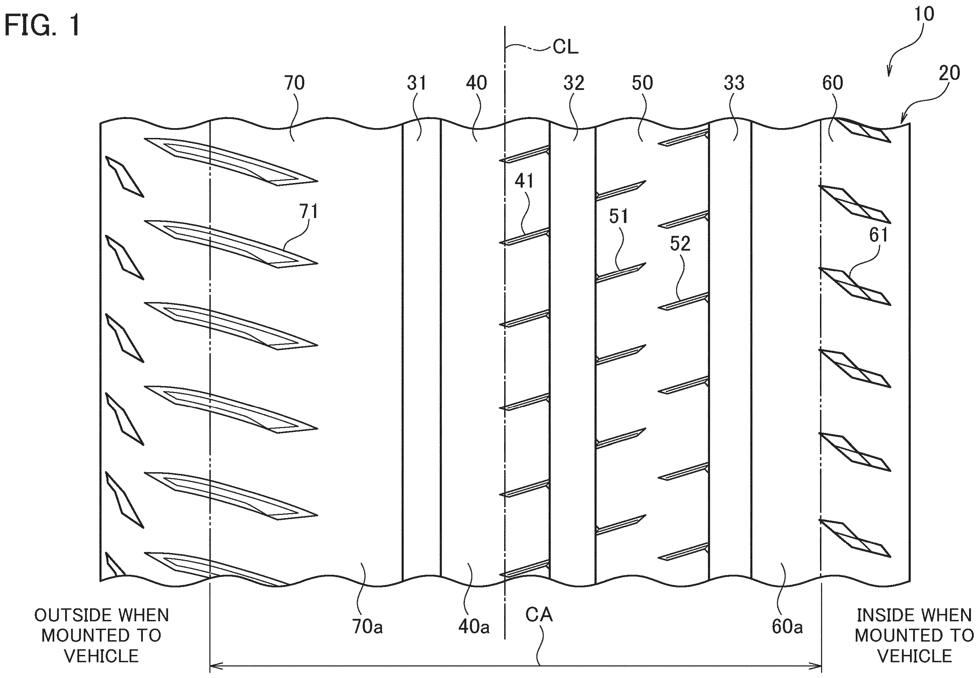

FIG. 1 is a partial plan view of a tread of a pneumatic tire 10 according to the present embodiment. As shown in FIG. 1, a pattern (tread pattern) is formed in a tread portion 20 of the pneumatic tire 10 in consideration of various performances required for the pneumatic tire 10, specifically, high-speed durability, vehicle dynamics (cornering performance, steering stability, braking performance, etc.), drainage performance, wear resistance, rolling resistance (RR), quietness (tire noise), and the like.

The pneumatic tire 10 is a so-called ultra high performance (UHP) tire, and can be suitably used for a vehicle capable of traveling at such an ultra high speed that the traveling speed exceeds 250 km/h.

Specifically, the pneumatic tire 10 may correspond to a speed symbol W (270 km/h), Y (300 km/h) or (Y) (greater than 300 km/h) or a speed category ZR (greater than 240 km/h). A speed symbol is a symbol representing the maximum speed at which a tire can run under prescribed conditions with the mass indicated by its load index.

The pneumatic tire 10 may not necessarily correspond to such a high maximum speed, and may correspond to, for example, the speed symbol V (240 km/h).

The size (rim diameter, tire width and aspect ratio) of the pneumatic tire 10 may be appropriately set according to the vehicle to be mounted, and is not particularly limited, but a rim diameter of 19 inches or more, a tire width of 275 mm or more, and an aspect ratio of 40% or less are assumed. However, smaller rim diameters (for example, 17 inches), narrower tire widths (for example, 215 mm) and higher aspect ratio (for example, 45%) may be used.

The tire width is also referred to as the section width. The section width is the total width of the tire excluding the patterns and characters on the sides of the tire, and does not include rim guards.

The pneumatic tire 10 can cope with running not only on a general road but also on a circuit (race course, race track). The pneumatic tire 10 also corresponds to wet weather, that is, wet road surface. The pneumatic tire 10 has sufficient rigidity for a large lateral force, especially to accommodate high cornering speed during circuit driving.

From such a viewpoint, in the pneumatic tire 10, only a minimum number of groove elements (including sipes) for ensuring drainability are formed. Thus, the rigidity of the land portion is enhanced, and vehicle dynamics and wear resistance performance can be improved.

The pneumatic tire 10 clears the regulation value of the tire sole noise regulation international standard, specifically, ECE R 117-02. ECE R 117-02 specifies that the tire noise (also referred to as pass-by noise (PBN)) produced when the vehicle power source (engine) is stopped and the vehicle coasts at the specified speed shall be uniformly 74 dB or less (for normal load) for tires with a tire width exceeding 275 mm. In the case of an extra load, 75 dB or less is specified.

Therefore, the pneumatic tire 10 may have a narrower tire width as described above, but is assumed to have a tire width exceeding 275 mm which makes it more difficult to clear the specified PBN.

The pneumatic tire 10 has a so-called asymmetric pattern, and a surface (tire side part) to be an outside (or inside) when the tire is mounted to the vehicle is designated. For the pneumatic tire 10, it is not necessary to specify the rotational direction when the vehicle is mounted.

As shown in FIG. 1, the pneumatic tire 10 has the tread portion 20. The tread portion 20 is a part in contact with the road surface.

A plurality of linear circumferential grooves extending in the tire circumferential direction are formed in the tread portion 20. Specifically, a circumferential groove 31, a circumferential groove 32 and a circumferential groove 33 are formed in the tread portion 20.

The circumferential groove 31 is formed most in outside when mounted to the vehicle. The circumferential groove 31 is formed outside than a tire equatorial line CL when mounted to the vehicle. In this embodiment, the circumferential groove 31 constitutes a first circumferential groove.

The circumferential groove 32 is formed between the circumferential groove 31 and the circumferential groove 33 in the tire width direction. The circumferential groove 32 is formed inside than the circumferential groove 31 when mounted to the vehicle. In this embodiment, the circumferential groove 32 forms a second circumferential groove.

The circumferential groove 33 is formed most in inside when mounted to the vehicle. That is, the circumferential groove 33 is formed in inside than the circumferential groove 32 when mounted to the vehicle. In this embodiment, the circumferential groove 33 constitutes a third circumferential groove.

The circumferential groove 32 and the circumferential groove 33 are formed inside than the tire equatorial line CL when mounted to the vehicle .

The tread portion 20 divided by the plurality of circumferential grooves has a plurality of land portions in contact with the road surface.

Specifically, the tread portion 20 includes an outside center land portion 40, an inside center land portion 50, an inside shoulder land portion 60, and an outside shoulder land portion 70.

The outside center land portion 40 is provided between the circumferential groove 31 and the circumferential groove 32 in the tire width direction. The outside center land portion 40 is a rib-like land portion continuous in the tire circumferential direction.

The inside center land portion 50 is provided between the circumferential groove 32 and the circumferential groove 33 in the tire width direction. The inside center land portion 50 is also a rib-like land portion continuous in the tire circumferential direction.

The inside shoulder land portion 60 is formed in a shoulder portion of inside when mounted to the vehicle. The inside shoulder land portion 60 is formed in inside than the circumferential groove 33 when mounted to the vehicle.

The outside shoulder land portion 70 is formed in a shoulder portion of outside when mounted to the vehicle. The outside shoulder land portion 70 is formed in outside than the circumferential groove 31 when mounted to the vehicle.

A plurality of width direction sipes 41 are formed in the outside center land portion 40. The width direction sipes 41 are formed at a certain distance in the tire circumferential direction.

The width direction sipe 41 is a linear sipe extending in the tire width direction. One end of the width direction sipe 41 terminates within the outside center land portion 40. The other end of the width direction sipe 41 communicates with the circumferential groove 32.

The sipe is a narrow groove that closes within the ground plane of the tread portion 20, and the opening width of the sipe at the time of non-grounding is not particularly limited, but is preferably 0.1 mm to 1.5 mm.

A plurality of width direction sipes 51 and width direction sipes 52 are formed in the inside center land portion 50. A plurality of width direction sipes 51 and 52 are formed at a certain distance in the tire circumferential direction.

The width direction sipe 51 is formed near the circumferential groove 32, and one end of the width direction sipe 51 terminates in the inside center land portion 50. The width direction sipe 52 is formed near the circumferential groove 33, and one end of the width direction sipe 52 terminates in the inside center land portion 50.

The other end of the width direction sipe 41 communicates with the circumferential groove 32, and the other end of the width direction sipe 52 communicates with the circumferential groove 33.

In the present embodiment, the width direction sipe 41, the width direction sipe 51, and the width direction sipe 52 have similar shapes. The width direction sipe 41, the width direction sipe 51 and the width direction sipe 52 are inclined to the tire width direction along the tire width direction. That is, the width direction sipe 41, the width direction sipe 51, and the width direction sipe 52 are not parallel to the tire width direction and are inclined to the tire width direction. The inclination angle of the width direction sipe 41, the width direction sipe 51, and the width direction sipe 52 with respect to the tire width direction is preferably 45 degrees or less, and is preferably 30 degrees or less in consideration of compatibility between rigidity of the land portion and PBN suppression.

In the present embodiment, the width direction sipes 41, the width direction sipes 51, and the width direction sipes 52 are inclined in the same direction, but it is not necessary that all the width direction sipes are inclined in the same direction. Further, the width direction sipe 41, the width direction sipe 51 and the width direction sipe 52 are preferably offset from each other in the tire circumferential direction.

The inside shoulder land portion 60 has a slick portion 60 a. A plurality of shoulder grooves 61 terminating in the inside shoulder land portion 60 are formed in the inside shoulder land portion 60. The shoulder grooves 61 are formed at a certain distance in the tire circumferential direction.

The slick portion 60 a is a portion having a slick-like surface of the inside shoulder land portion 60. In this embodiment, the slick portion 60 a constitutes an inside slick portion.

The slick shape means that groove elements such as a width direction groove and a circumferential groove are not formed. It should be noted that a pinhole-like recess which can be used for determining the wear amount of the tread portion 20 or a protrusion such as a spew formed for the purpose of preventing air accumulation during tire vulcanization may be formed.

The slick portion 60 a may be defined as a portion in which the surface of the shoulder land portion 60 when normal load is loaded to the pneumatic tire 10 is slick in the ground contacting area (grounding region) of the inside shoulder land portion 60.

When normal load is loaded on the pneumatic tire 10, the ground contacting area CA contacts the road surface. As shown in FIG. 1, no shoulder groove 61 is formed in the slick portion 60 a of the inside shoulder land portion 60.

In Japan, normal internal pressure is the air pressure corresponding to the maximum load capacity of JATMA (Japan Automobile Tire Manufacturers Association) YearBook, and normal load is the maximum load capacity (maximum load) corresponding to the maximum load capacity of JATMA YearBook. In addition, ETRTO in Europe, TRA in the United States, and other tire standards in other countries are applicable.

Although the shoulder groove 61 is not formed in the ground contacting area CA, the area of the inside shoulder land portion 60 where the shoulder groove 61 is formed can also be grounded to the road surface during cornering or the like. The shoulder groove 61 may also serve as a treadwear indicator (slip sign) used to confirm the wear condition of the inside shoulder land portion 60. The shoulder groove 61 may be formed for improving the grounding property of the inside shoulder land portion 60.

The outside center land portion 40 has a slick portion 40 a. The slick portion 40 a is a portion having a slick-like surface of the outside center land portion 40. The slick portion 40 a is formed in the region of outside when mounted to the vehicle in the outside center land portion 40. That is, the slick portion 40 a may be defined as a portion where the surface of the outside center land portion 40 is slick in the region of outside when mounted to the vehicle in the outside center land portion 40. In this embodiment, the slick portion 40 a constitutes a center slick portion.

The outside shoulder land portion 70 has a slick portion 70 a. The slick portion 70 a is a portion having has a slick-like surface of the outside shoulder land portion 70. The slick portion 70 a is formed in the region of outside when mounted to the vehicle in the inside shoulder land portion 70. That is, the slick portion 70 a may be defined as a portion where the surface of the outside shoulder land portion 70 is slick in the region of inside when mounted to the vehicle in the outside shoulder land portion 70. In this embodiment, the slick portion 70 a constitutes an outside slick portion.

A plurality of lug grooves 71 are formed in the outside shoulder land portion 70. A plurality of lug grooves 71 are formed at a certain distance in the tire circumferential direction.

The lug groove 71 is inclined to the tire width direction along the tire width direction. That is, the lug groove 71 is not parallel to the tire width direction but inclined to the tire width direction. The inclination angle of the lug groove 71 with respect to the tire width direction is preferably 45 degrees or less in the same manner as the width direction sipe 41, the width direction sipe 51, and the width direction sipe 52, and is preferably 30 degrees or less in consideration of compatibility between rigidity of outside shoulder land portion 70 and PBN suppression.

In this embodiment, the sum of the groove widths of the circumferential groove 31, the circumferential groove 32, and the circumferential groove 33 is larger than the width of the outside center land portion 40 along the tire width direction.

The sum of the groove widths of the circumferential groove 31, the circumferential groove 32 and the circumferential groove 33 is wider than the width of inside center land portion 50 along the tire width direction.

On the other hand, the sum of the groove widths of the circumferential groove 31, the circumferential groove 32 and the circumferential groove 33 is narrower than the width of the slick portion 40 a, the slick portion 60 a and the slick portion 70 a along the tire width direction.

In the present embodiment, the width of the slick portion 40 a along the tire width direction is larger than the width of the outside center land portion 40 other than the slick portion 40 a along the tire width direction, that is, the width of the portion where the width direction sipe 41 is formed along the tire width direction.

In this embodiment, the width of the lug groove 71 in the ground contacting area CA along the tire width direction is larger than the width of the slick portion 70 a along the tire width direction.

### (2)Cross-sectional shape of the circumferential groove

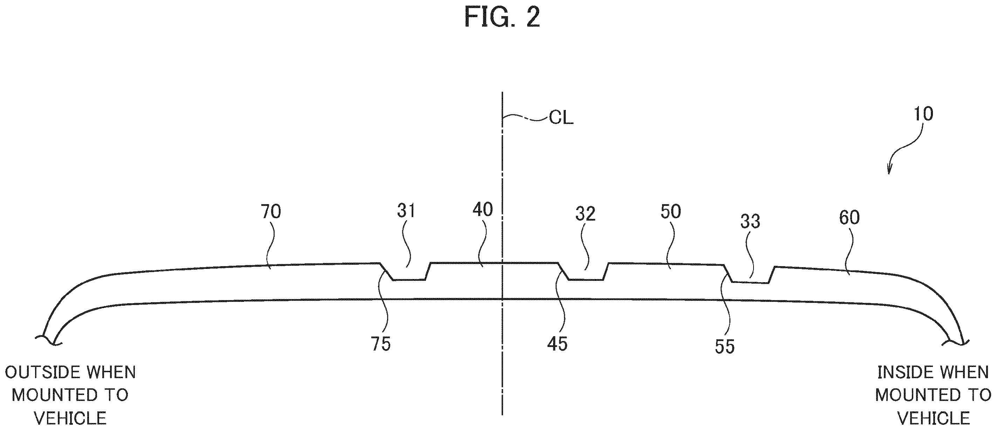

Next, the cross-sectional shapes of the circumferential groove 31, the circumferential groove 32, and the circumferential groove 33 will be described. FIG. 2 is a schematic cross-sectional view of the pneumatic tire 10 along the tire width direction and the tire radial direction. In FIG. 2, hatching of a cross section and a structure such as a carcass and a belt are omitted.

As shown in FIG. 2, the outside shoulder land portion 70 has a groove wall portion 75 forming the circumferential groove 31. In this embodiment, the groove wall portion 75 constitutes a first groove wall portion.

The outside center land portion 40 has a groove wall portion 45 forming the circumferential groove 32. In this embodiment, the groove wall portion 45 constitutes a second groove wall portion.

The inside center land portion 50 has a groove wall portion 55 forming the circumferential groove 33. In this embodiment, the groove wall portion 55 constitutes a third groove wall portion.

The groove wall portion 75, the groove wall portion 45 and the groove wall portion 55 incline toward inside in the tire radial direction to approach inside when mounted to the vehicle. In this embodiment, the sectional shapes of the groove wall portion 75, the groove wall portion 45, and the groove wall portion 55 are linear. However, the entire groove wall portion may not necessarily be in a linear shape inclined toward inside the tire radial direction to approach inside when mounted to the vehicle.

In this embodiment, the groove depths of the circumferential groove 31, the circumferential groove 32 and the circumferential groove 33 are the same.

The groove wall portion 75 is inclined more than the groove wall portion 45. The groove wall portion 45 is inclined more than the groove wall portion 55.

That is, the inclination angle of the groove wall portion 75 with respect to the tire radial direction is larger than the inclination angle of the groove wall portion 45 with respect to the tire radial direction, and the inclination angle of the groove wall portion 45 with respect to the tire radial direction is larger than the inclination angle of the groove wall portion 55 with respect to the tire radial direction. Therefore, the relation of the inclination angle is the groove wall portion 75 > the groove wall portion 45 > the groove wall portion 55.

### (3)Shape of width direction sipe

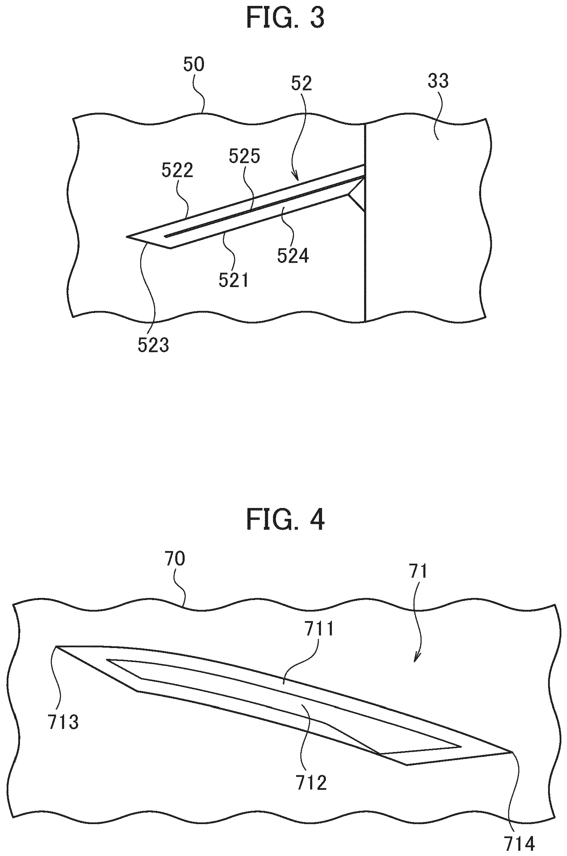

FIG. 3 is a plan view of the width direction sipe 52. The width direction sipe 41 and the width direction sipe 51 have the same shape.

As shown in FIG. 3, the width direction sipe 52 includes a width direction groove wall portion 521, a width direction groove wall portion 522, and a circumferential groove wall portion 523.

The width direction groove wall portion 521 extends in the tire width direction. In this embodiment, the width direction groove wall portion 521 constitutes a first width direction groove wall portion.

The width direction groove wall portion 522 extends in the tire width direction like the width direction groove wall portion 521 and extends to the center side of the inside center land portion 50 from the width direction groove wall portion 521. In this embodiment, the width direction groove wall portion 522 constitutes a second width direction groove wall portion. In the case of the width direction sipe 41, the width direction groove wall portion 522 extends to the center side of the outside center land portion 40.

The circumferential groove wall portion 523 is communicated to the width direction groove wall portion 521 and the width direction groove wall portion 522. The circumferential groove wall portion 523 is linear.

Since the width direction groove wall portion 521 and the width direction groove wall portion 522 are different in length, the circumferential groove wall portion 523 is inclined with respect to the tire circumferential direction and also inclined with respect to the tire width direction. That is, one end of the width direction sipe 52 has a shape like a tip of a sword in a tread surface view.

An inclined portion 524 inclined toward inside in the tire radial direction from the tread surface (portion in contact with the road surface) side of the center land portion 50 is formed at a peripheral edge portion of the width direction sipe 52.

The inclined portion 524 communicates to a sipe portion 525 of the width direction sipe 52. The sipe part 525 is linear along the tire width direction, but may not necessarily be linear in tire radial direction, that is, the sipe depth direction. For example, the sipe portion 525 may have a shape that zigzags in the tire circumferential direction as it goes to inside in the tire radial direction. More specifically, the sipe portion 525 may be a so-called three-dimensional sipe having an M-shaped cross-sectional shape along the tire circumferential direction and the tire radial direction.

### (4)Shape of lug groove

FIG. 4 is a plan view of the lug groove 71. As shown in FIG. 4, the lug groove 71 is formed by an inclined portion 711, a groove portion 712, an end portion 713, and an end portion 714. In this embodiment, the lug groove 71 has a slightly curved wedge-shape.

The inclined portion 711 is formed at the peripheral edge portion of the lug groove 71. The inclined portion 711 is inclined toward inside in the tire radial direction from the tread surface side of the outside shoulder land portion 70. The inclined portion 711 communicates to the groove portion 712.

The groove portion 712 is a void having a certain depth in the tire radial direction. The depth of the groove portion 712 is not particularly limited, but is set to an appropriate value in consideration of drainability, grounding property (rigidity) of the outside shoulder land portion 70, and PBN suppression.

The end portion 713 is an end portion of the lug groove 71 located in outside when mounted to the vehicle. The end portion 714 is an end portion of the lug groove 71 located in inside when mounted to the vehicle. The end portion 713 and the end portion 714 are offset in the tire circumferential direction, that is, their positions in the tire circumferential direction are different.

### (5)Function and effects

According to the above-described embodiment, the following effects can be obtained. More specifically, three circumferential grooves (circumferential groove 31, circumferential groove 32, and circumferential groove 33) are formed in the tread portion 20 of the pneumatic tire 10, and the outside center land portion 40, the inside center land portion 50, and the inside shoulder land portion 60 which are divided by the circumferential grooves are provided.

The plurality of width direction sipes (width direction sipe 41, width direction sipe 51, and width direction sipe 52) are formed in the outside center land portion 40 and the inside center land portion 50.

Firstly, the three circumferential grooves ensure the drainability necessary for travelling a vehicle mounted with an ultra-high performance tire such as the pneumatic tire 10. Further, since the circumferential groove 32 and the circumferential groove 33 are formed in inside when mounted to the vehicle than the tire equatorial line CL, and the width direction sipe 41, the width direction sipe 51 and the width direction sipe 52 are formed in inside when mounted to the vehicle than the tire equatorial line CL, the drainability of inside of the tread portion 20 on the basis of the tire equatorial line CL when mounted to the vehicle can be enhanced.

In addition, the inside shoulder land portion 60 has the slick portion 60 a n which the surface of the shoulder land portion 60 when normal load is loaded to the pneumatic tire 10 is slick in the ground contacting area of the inside shoulder land portion 60.

Therefore, the slick portion 60 a can be located in the ground contacting area CA of the inside of the tread portion 20 on the basis of the tire equatorial line CL when mounted to the vehicle. Since the slick portion 60 a does not have a groove element, the rigidity of the inside shoulder land portion 60, in particular, the rigidity with respect to lateral force, can be improved. Furthermore, since the slick portion 60 a has no groove element, it contributes to the suppression of tire noise, specifically, pass-by noise (PBN).

That is, the pneumatic tire 10 can achieve both the suppression of tire noise and the high rigidity with respect to lateral force, while allowing the vehicle to travel at an ultrafast speed including a wet road surface.

In this embodiment, the outside center land portion 40 has the slick portion 40 a in which the surface of the outside center land portion 40 is slick in the region of outside in the outside center land portion 40 when mounted to the vehicle. Therefore, the slick portion 40 a can be located in the ground contacting area CA of the outside of the tread portion 20 on the basis of the tire equatorial line CL when mounted to the vehicle. Since the slick portion 40 a has no groove element, the rigidity of the outside center land portion 40, in particular, the rigidity with respect to lateral force, can be improved. Further, since the slick portion 40 a has no groove element, it contributes to the suppression of the PBN. Thus, the suppression of tire noise and the high rigidity with respect to lateral force can be made compatible in a higher dimension.

In this embodiment, the outside shoulder land portion 70 has a slick portion 70 a in which the surface of the outside shoulder land portion 70 is slick in the region of inside in the outside shoulder land portion 70 when mounted to the vehicle. Therefore, the slick portion 70 a can be located in the ground contacting area CA of the outside of the tread portion 20 on the basis of the tire equatorial line CL when mounted to the vehicle. Since the slick portion 70 a has no groove element, the rigidity of outside center land portion 40, in particular, the rigidity with respect to lateral force, can be improved. Further, since the slick portion 40 a has no groove element, it contributes to the suppression of the PBN. Thus, the suppression of tire noise and the high rigidity with respect to lateral force can be made compatible in a higher dimension.

Further, by providing the slick portion 60 a, the slick portion 40 a, and the slick portion 70 a from inside to outside when mounted to the vehicle, the grip, particularly on the dry road surface, can be effectively improved.

In this embodiment, the plurality of lug grooves 71 inclined with respect to the tire width direction are formed along the tire width direction in the outside shoulder land portion 70. Since the lug groove 71 is inclined with respect to the tire width direction along the tire width direction, the lug groove 71 contributes to the improvement of the drainability without greatly reducing the rigidity of the outside shoulder land portion 70. If the lug groove 71 is largely inclined with respect to the tire width direction, the rigidity of the outside shoulder land portion 70 is greatly reduced and is not preferable.

Since the lug groove 71 is not parallel to the tire width direction, tire noise generated when the lug groove 71 comes into contact with the road surface can also be suppressed. Further, by forming the lug groove 71, the outside shoulder land portion 70 around the lug groove 71 is easily deformed, and the grounding property of the outside shoulder land portion 70 located in the ground contacting area CA is improved. This can further improve the grip, especially on the dry road surface.

In the present embodiment, the width direction sipe 52 (also the width direction sipe 41 and the width direction sipe 51) is formed by the width direction groove wall portion 521 extending in the tire width direction, the width direction groove wall portion 522 extending in the tire width direction and extending from the width direction groove wall portion 521 to the center side of the inside center land portion 50, and the linear circumferential groove wall portion 523 communicating to the width direction groove wall portion 521 and the width direction groove wall portion 522.

For this reason, one end (which may be referred to as the tip) of the width direction sipe 52 is communicated in such a state that the circumferential groove wall portion 523 is inclined rather than perpendicular to the width direction groove wall portion 521 and the width direction groove wall portion 522, and is shaped like the tip of a sword. As a result, it is possible to suppress the occurrence of cracks starting at a position where the circumferential groove wall 523 is communicated to the widthwise groove wall 521 and the widthwise groove wall 522.

In this embodiment, the outside shoulder land portion 70 has the groove wall portion 75, the outside center land portion 40 has the groove wall portion 45, and the inside center land portion 50 has the groove wall portion 55.

The groove wall portion 75, the groove wall portion 45, and the groove wall portion 55 are inclined toward inside in the tire radial direction to approach inside when mounted to the vehicle , and the groove wall portion 75 is inclined more than the groove wall portion 45. Therefore, the groove wall portion 75 contributes to increase the rigidity with respect to the input of lateral force from outside to the outside shoulder land portion 70 when mounted to the vehicle.

Further, in the present embodiment, the groove wall portion 45 is inclined more than the groove wall portion 55. Therefore, the groove wall portion 45 can achieve a certain degree of rigidity improvement with respect to the input of lateral force from outside to the outside center land portion 40 when mounted to the vehicle, while securing the drainability.

In this embodiment, the slick portion 70 a is located within the ground contacting area CA. Further, the width of the lug groove 71 in the ground contacting area CA along the tire width direction is wider than the width of the slick portion 70 a along the tire width direction. Thus, while the grip of the slick portion 70 a on the dry road surface is secured, the drainability in the ground contacting area of the outside shoulder land portion 70 can be secured, and in particular, it can contribute to the improvement of vehicle dynamics on the wet road surface.

In this embodiment, the sum of the groove widths of the circumferential groove 31, the circumferential groove 32, and the circumferential groove 33 is larger than the width of outside center land portion 40 along the tire width direction. The sum of the groove widths of the circumferential groove 31, the circumferential groove 32 and the circumferential groove 33 is wider than the width of the inside center land portion 50 along the tire width direction.

On the other hand, the sum of the groove widths of the circumferential groove 31, the circumferential groove 32 and the circumferential groove 33 is narrower than the width of the slick portion 40 a, the slick portion 60 a and the slick portion 70 a along the tire width direction.

Thus, the plurality of slick portions in the ground contacting area CA can achieve a high degree of rigidity improvement with respect to lateral force and PBN suppression while surely securing the drainability necessary for the traveling of the vehicle mounted with the ultra-high performance tire such as the pneumatic tire 10.

### (6)Other embodiments

Although the contents of the present invention have been described above in accordance with the embodiments it would be obvious to those skilled in the art that various modifications and improvements are possible, the invention being limited to the scope defined by the claims.

For example, in the pneumatic tire 10, three circumferential grooves are formed in the tread portion 20, but four or more circumferential grooves may be formed in the tread portion 20. The circumferential groove to be added may be a circumferential narrow groove narrower than the width of the circumferential groove 31, the circumferential groove 32 and the circumferential groove 33.

In the pneumatic tire 10, the circumferential groove 31, the circumferential groove 32, and the circumferential groove 33 are perfectly linear, but may be formed so as to meander a little in the tire width direction as long as the entire circumferential groove extends in the tire circumferential direction.

In the pneumatic tire 10, the sum of the groove widths of the circumferential groove 31, the circumferential groove 32 and the circumferential groove 33 is wider than the width of the outside center land portion 40 along the tire width direction, and the sum of the groove widths of the circumferential groove 31, the circumferential groove 32 and the circumferential groove 33 is wider than the width of the inside center land portion 50 along the tire width direction, but either or both of these relationships may not be satisfied.

In the pneumatic tire 10, the sum of the groove widths of the circumferential groove 31, the circumferential groove 32, and the circumferential groove 33 is smaller than the widths of the slick portion 40 a, the slick portion 60 a, and the slick portion 70 a along the tire width direction, but such a relationship may not be satisfied.

Part of the land portion and the groove elements (including sipes) constituting the pneumatic tire 10 may not necessarily be as shown in FIG. 1 ~ 4.

As noted above, embodiments of the invention have been described. Various alternative embodiments, embodiments and operational techniques will become apparent to those skilled in the art from this disclosure, the invention being limited to the scope defined by the claims.

### [Reference Signs List]

10 pneumatic tires
20 tread portion
31, 32, 33 circumferential groove
40 outside center land portion
40 a slick portion
41 width direction sipe
45 groove wall portion
50 inside center land portion
51, 52 width direction sipe
55 groove wall portion
60 inside shoulder land portion
60 a slick portion
61 shoulder groove
70 outside shoulder land portion
70 a slick portion
71 lug groove
75 groove wall portion
521 width groove wall portion
522 width groove wall portion
523 circumferential groove wall portion
524 inclined portion
525 sipe portion
711 inclined portion
712 groove portion
713 end portion
714 end portion
CA ground contacting area
CL tire equatorial line

## Claims

1. A tire (10) having a tread portion (20) in which a plurality of linear circumferential grooves extending in tire circumferential direction are formed, wherein
the circumferential grooves include:
a first circumferential groove (31);
a second circumferential groove (32) formed in inside when mounted to a vehicle than the first circumferential groove (31); and
a third circumferential groove (33) formed in inside when mounted to the vehicle than the second circumferential groove (32),
the second circumferential groove (32) and the third circumferential groove (33) are formed in inside when mounted to the vehicle than a tire equatorial line (CL), wherein
the tread portion (20) is provided with:
an outside center land portion (40) provided between the first circumferential groove (31) and the second circumferential groove (32);
an inside center land portion (50) provided between the second circumferential groove (32) and the third circumferential groove (33);
an inside shoulder land portion (60) formed in inside when mounted to the vehicle than the third circumferential groove (33), wherein
a plurality of linear width direction sipes (41, 51, 52) inclined with respect to the tire width direction along the tire width direction are formed in the outside center land portion (40) and the inside center land portion (50), and
the inside shoulder land portion (60) has an inside slick portion (60a) in which a surface of the inside shoulder land portion (60) is slick in a grounding region of the inside shoulder land portion (60) in a state where normal load is loaded on the tire (10), wherein the outside center land portion (40) includes a center slick portion (40a) in which a surface of the outside center land portion (40) is slick in a region of outside of the outside center land portion (40),
the center slick portion (40a) is formed in a region of outside in the outside center land portion (40) when mounted to the vehicle,
**characterized in that**
a width of the center slick portion (40a) along the tire width direction is larger than a width of a portion in the outside center land portion (40) where width direction sipes (41) are formed along the tire width direction.

2. The tire according to claim 1, wherein the tread portion (20) is provided with an outside shoulder land portion (70) formed in outside when mounted to the vehicle than the first circumferential groove (31), and
the outside shoulder land portion (70) includes an outside slick portion (70a) in which a surface of the outside shoulder land portion (70) is slick in an area of inside of the outside shoulder land portion (70) when mounted to the vehicle.

3. The tire according to claim 2, wherein a plurality of lug grooves (71) inclined with respect to the tire width direction along the tire width direction are formed in the outside shoulder land portion (70).

4. The tire (10) according to any one of claims 1 to 3, wherein
one end of the width direction sipe terminates within the outside center land portion (40) or the inside center land portion (50);
the width direction sipe is provided with:
a first width direction groove wall portion extending in the tire width direction;
a second width direction groove wall portion extending in the tire width direction and extending from the first width direction groove wall portion to a center side of the outside center land portion or the inside center land portion; and
a linear circumferential groove wall portion extending from the first width direction groove wall portion to the second width direction groove wall portion.

5. The tire according to claim 2 or 3, wherein
the outside shoulder land portion (70) has a first groove wall portion forming the first circumferential groove (31),
the outside center land portion (40) has a second groove wall portion forming the second circumferential groove (32), and
the first groove wall portion and the second groove wall portion incline toward inside in the tire radial direction to approach inside when mounted to the vehicle, and
the first groove wall portion is inclined more than the second groove wall portion.

6. The tire according to claim 5, wherein
the inside center land portion (50) has a third groove wall portion forming the third circumferential groove (33),
the third groove wall portion is inclined toward inside in the tire radial direction to approach inside when mounted to the vehicle, and
the second groove wall portion is inclined more than the third groove wall portion.

## Patentansprüche

1. Reifen (10), der einen Laufflächenabschnitt (20) aufweist, in dem eine Vielzahl von linearen umlaufenden Rillen ausgebildet ist, die sich in einer Reifenumfangsrichtung erstrecken, wobei
die umlaufenden Rillen Folgendes einschließen:
eine erste umlaufende Rille (31);
eine zweite umlaufende Rille (32), die, wenn an einem Fahrzeug montiert, weiter nach innen ausgebildet ist als die erste umlaufende Rille (31); und
eine dritte umlaufende Rille (33), die, wenn an dem Fahrzeug montiert, weiter nach innen ausgebildet ist als zweite umlaufende Rille (32),
wobei die zweite umlaufende Rille (32) und die dritte umlaufende Rille (33), wenn an dem Fahrzeug montiert, weiter nach innen ausgebildet sind als eine Reifenäquatoriallinie (CL), wobei
der Laufflächenabschnitt (20) mit Folgendem versehen ist:
einem äußeren Mittenstegabschnitt (40), der zwischen der ersten umlaufenden Rille (31) und der zweiten umlaufenden Rille (32) bereitgestellt wird;
einem inneren Mittenstegabschnitt (50), der zwischen der zweiten umlaufenden Rille (32) und der dritten umlaufenden Rille (33) bereitgestellt wird;
einem inneren Schulterstegabschnitt (60), der, wenn an dem Fahrzeug montiert, weiter nach innen ausgebildet ist als die dritte umlaufende Rille (33), wobei
eine Vielzahl von linearen Breitenrichtungslamellen (41, 51, 52), die in Bezug auf die Reifenbreitenrichtung geneigt sind, entlang der Reifenbreitenrichtung in dem äußeren Mittenstegabschnitt (40) und dem inneren Mittenstegabschnitt (50) ausgebildet ist, und
der innere Schulterstegabschnitt (60) einen inneren profillosen Abschnitt (60a) aufweist, in dem eine Oberfläche des inneren Schulterstegabschnitts (60) in einer Bodenberührungsregion des inneren Schulterstegabschnitts (60) in einem Zustand, in dem der Reifen (10) mit einer normalen Last belastet ist, profillos ist, wobei der äußere Mittenstegabschnitt (40) einen profillosen Mittenabschnitt (40a) einschließt, in dem eine Oberfläche des äußeren Mittenstegabschnitts (40) in einer Region einer Außenseite des äußeren Mittenstegabschnitts (40) profillos ist,
der profillose Mittenabschnitt (40a), wenn an dem Fahrzeug montiert, in einer Region einer Außenseite in dem äußeren Mittenstegabschnitt (40) ausgebildet ist, **dadurch gekennzeichnet, dass**
eine Breite des profillosen Mittenabschnitts (40a) entlang der Reifenbreitenrichtung größer ist als eine Breite eines Abschnitts in dem äußeren Mittenstegabschnitt (40), wo Breitenrichtungslamellen (41) entlang der Reifenbreitenrichtung ausgebildet sind.

2. Reifen nach Anspruch 1, wobei der Laufflächenabschnitt (20) mit einem äußeren Schulterstegabschnitt (70) versehen ist, der, wenn an dem Fahrzeug montiert, weiter nach außen ausgebildet ist als die erste umlaufende Rille (31), und
der äußere Schulterstegabschnitt (70) einen äußeren profillosen Abschnitt (70a) einschließt, in dem eine Oberfläche des äußeren Schulterstegabschnitts (70) in einem Bereich einer Innenseite des äußeren Schulterstegabschnitts (70), wenn an dem Fahrzeug montiert, profillos ist.

3. Reifen nach Anspruch 2, wobei eine Vielzahl von Stollenrillen (71), die in Bezug auf die Reifenbreitenrichtung geneigt sind, entlang der Reifenbreitenrichtung in dem äußeren Schulterstegabschnitt (70) ausgebildet ist.

4. Reifen (10) nach einem der Ansprüche 1 bis 3, wobei
ein Ende der Breitenrichtungslamelle innerhalb des äußeren Mittenstegabschnitts (40) oder des inneren Mittenstegabschnitts (50) endet;
die Breitenrichtungslamelle mit Folgendem versehen ist:
einem ersten Breitenrichtungsrillen-Wandabschnitt, der sich in der Reifenbreitenrichtung erstreckt;
einem zweiten Breitenrichtungsrillen-Wandabschnitt, der sich in der Reifenbreitenrichtung erstreckt und sich von dem ersten Breitenrichtungsrillen-Wandabschnitt bis zu einer Mittenseite des äußeren Mittenstegabschnitts oder des inneren Mittenstegabschnitts erstreckt; und
einem linearen umlaufenden Rillenwandabschnitt, der sich von dem ersten Breitenrichtungsrillen-Wandabschnitt bis zu dem zweiten Breitenrichtungsrillen-Wandabschnitt erstreckt.

5. Reifen nach Anspruch 2 oder 3, wobei
der äußere Schulterstegabschnitt (70) einen ersten Rillenwandabschnitt aufweist, der die erste umlaufende Rille (31) ausbildet,
der äußere Mittenstegabschnitt (40) einen zweiten Rillenwandabschnitt aufweist, der die zweite umlaufende Rille (32) ausbildet, und
der erste Rillenwandabschnitt und der zweite Rillenwandabschnitt sich, wenn an dem Fahrzeug montiert, hin zur Innenseite in der Reifenradialrichtung neigen, um sich der Innenseite anzunähern, und
der erste Rillenwandabschnitt stärker geneigt ist als der zweite Rillenwandabschnitt.

6. Reifen nach Anspruch 5, wobei
der innere Mittenstegabschnitt (50) einen dritten Rillenwandabschnitt aufweist, der die dritte umlaufende Rille (33) ausbildet,
der dritte Rillenwandabschnitt, wenn an dem Fahrzeug montiert, hin zur Innenseite in der Reifenradialrichtung geneigt ist, um sich der Innenseite anzunähern, und
der zweite Rillenwandabschnitt stärker geneigt ist als der dritte Rillenwandabschnitt.

## Revendications

1. Pneumatique (10), comportant une partie de bande de roulement (20) dans laquelle sont formées une pluralité de rainures circonférentielles linéaires s'étendant dans la direction circonférentielle du pneumatique, dans lequel
les rainures circonférentielles incluent :
une première rainure circonférentielle (31) ;
une deuxième rainure circonférentielle (32) formée davantage vers l'intérieur, lors du montage sur un véhicule, que la première rainure circonférentielle (31) ; et
une troisième rainure circonférentielle (33) formée davantage vers l'intérieur, lors du montage sur le véhicule, que la deuxième rainure circonférentielle (32),
la deuxième rainure circonférentielle (32) et la troisième rainure circonférentielle (33) sont formées davantage vers l'intérieur, lors du montage sur le véhicule, qu'une ligne équatoriale du pneumatique (CL), dans lequel
la partie de bande de roulement (20) est dotée de :
une partie d'appui centrale extérieure (40) fournie entre la première rainure circonférentielle (31) et la deuxième rainure circonférentielle (32) ;
une partie d'appui centrale intérieure (50) fournie entre la deuxième rainure circonférentielle (32) et la troisième rainure circonférentielle (33) ;
une partie d'appui d'épaulement intérieure (60) formée davantage vers l'intérieur, lors du montage sur le véhicule, que la troisième rainure circonférentielle (33), dans lequel
une pluralité de lamelles linéaires dans la direction de la largeur (41, 51, 52) inclinées par rapport à la direction de la largeur du pneumatique, le long de la direction de la largeur du pneumatique, sont formées dans la partie d'appui centrale extérieure (40) et la partie d'appui centrale intérieure (50), et
la partie d'appui d'épaulement intérieure (60) comporte une partie intérieure lisse (60a) dans laquelle une surface de la partie d'appui d'épaulement intérieure (60) est lisse dans une région de contact avec le sol de la partie d'appui d'épaulement intérieure (60) dans un état où une charge normale est chargée sur le pneumatique (10), dans lequel la partie d'appui centrale extérieure (40) inclut une partie centrale lisse (40a) dans laquelle une surface de la partie d'appui centrale extérieure (40) est lisse dans une région de l'extérieur de la partie d'appui centrale extérieure (40),
la partie centrale lisse (40a) est formée dans une région de l'extérieur dans la partie d'appui centrale extérieure (40) lors du montage sur le véhicule, **caractérisé en ce que**
une largeur de la partie centrale lisse (40a), le long de la direction de la largeur du pneumatique, est supérieure à une largeur d'une partie dans la partie d'appui centrale extérieure (40) où des lamelles dans la direction de la largeur (41) sont formées le long de la direction de la largeur du pneumatique.

2. Pneumatique selon la revendication 1, dans lequel la partie de bande de roulement (20) est dotée d'une partie d'appui d'épaulement extérieure (70) formée davantage vers l'extérieur, lors du montage sur le véhicule, que la première rainure circonférentielle (31), et
la partie d'appui d'épaulement extérieure (70) inclut une partie lisse extérieure (70a) dans laquelle une surface de la partie d'appui d'épaulement extérieure (70) est lisse dans une zone de l'intérieur de la partie d'appui d'épaulement extérieure (70) lors du montage sur le véhicule.

3. Pneumatique selon la revendication 2, dans lequel une pluralité de rainures à barrettes (71) inclinées par rapport à la direction de la largeur du pneumatique, le long de la direction de la largeur du pneumatique, sont formées dans la partie d'appui d'épaulement extérieure (70).

4. Pneumatique (10) selon l'une quelconque des revendications 1 à 3, dans lequel
une extrémité de la lamelle dans la direction de la largeur se termine à l'intérieur de la partie d'appui centrale extérieure (40) ou de la partie d'appui centrale intérieure (50) ;
la lamelle dans la direction de la largeur est dotée de :
une première partie de paroi de rainure dans la direction de la largeur s'étendant dans la direction de la largeur du pneumatique ;
une deuxième partie de paroi de rainure dans la direction de la largeur s'étendant dans la direction de la largeur du pneumatique et s'étendant de la première partie de paroi de rainure dans la direction de la largeur vers un côté central de la partie d'appui centrale extérieure ou de la partie d'appui centrale intérieure ; et
une partie de paroi de rainure circonférentielle linéaire s'étendant de la première partie de paroi de rainure dans la direction de la largeur vers la deuxième partie de paroi de rainure dans la direction de la largeur.

5. Pneumatique selon la revendication 2 ou 3, dans lequel
la partie d'appui d'épaulement extérieure (70) comporte une première partie de paroi de rainure formant la première rainure circonférentielle (31),
la partie d'appui centrale extérieure (40) comporte une deuxième partie de paroi de rainure formant la deuxième rainure circonférentielle (32), et
la première partie de paroi de rainure et la deuxième partie de paroi de rainure sont inclinées vers l'intérieur dans la direction radiale du pneumatique pour se rapprocher de l'intérieur lors du montage sur le véhicule, et
la première partie de paroi de rainure est plus inclinée que la deuxième partie de paroi de rainure.

6. Pneumatique selon la revendication 5, dans lequel
la partie d'appui centrale intérieure (50) comporte une troisième partie de paroi de rainure formant la troisième rainure circonférentielle (33),
la troisième partie de paroi de rainure est inclinée vers l'intérieur dans la direction radiale du pneumatique pour se rapprocher de l'intérieur lors du montage sur le véhicule, et
la deuxième partie de paroi de rainure est plus inclinée que la troisième partie de paroi de rainure.
